(19) **Europäisches Patentamt European Patent Office Office européen des brevets**

(11) **EP 4 544 254 B1**

(12) **EUROPEAN PATENT SPECIFICATION**

(45) Date of publication and mention
of the grant of the patent:
**01.10.2025  Bulletin 2025/40**

(21) Application number: **23741490.9**

(22) Date of filing: **26.06.2023**

(51) International Patent Classification (IPC):
**F28F 1/04** *(2006.01)*  **F28D 21/00** *(2006.01)*

(52) Cooperative Patent Classification (CPC):
**F28D 7/024; F24H 1/43; F24H 1/445; F24H 8/00;
F28D 7/0083; F28D 7/022; F28F 1/02; F28F 1/04;
F28F 1/06; F28F 21/083;** F28D 2021/0024;
Y02B 30/00

(86) International application number:
**PCT/IT2023/050151**

(87) International publication number:
**WO 2024/003957 (04.01.2024 Gazette 2024/01)**

(54) **BOILER, IN PARTICULAR A CONDENSING BOILER, COMPRISING A HEAT EXCHANGER**

HEIZKESSEL, INSBESONDERE BRENNWERTKESSEL, MIT EINEM WÄRMETAUSCHER

CHAUDIÈRE, EN PARTICULIER CHAUDIÈRE À CONDENSATION, COMPRENANT UN
ÉCHANGEUR DE CHALEUR

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **27.06.2022  IT 202200013435**

(43) Date of publication of application:
**30.04.2025  Bulletin 2025/18**

(73) Proprietor: **Riello S.p.A.
37045 Legnago (IT)**

(72) Inventors:
• **DE NARDIS, Marco
  37045 LEGNAGO (VR) (IT)**
• **DI MARCO, Diana
  37045 LEGNAGO (VR) (IT)**
• **LAMBRUGHI, Stefano
  37045 LEGNAGO (VR) (IT)**

(74) Representative: **Studio Torta S.p.A.
Via Viotti, 9
10121 Torino (IT)**

(56) References cited:
**EP-B1- 2 504 632      DE-C2- 4 142 203
US-B2- 10 024 603      US-B2- 7 428 883**

**Description**

The present invention concerns a boiler, in particular a condensing boiler. A boiler having the features of the preamble of claim 1 is known from US 7 428 883.

More precisely, the present invention concerns a boiler comprising a heat exchanger having a particular tube profile.

In the state of the art, heat exchangers for condensing boilers are known which have a serpentine pattern.

Examples are described in the following patent titles EP 2 504 632 B1 or WO 2016/084109 A1 concerning heat exchangers for condensing boilers comprising double serpentine circuits, in particular an internal circuit and an external one.

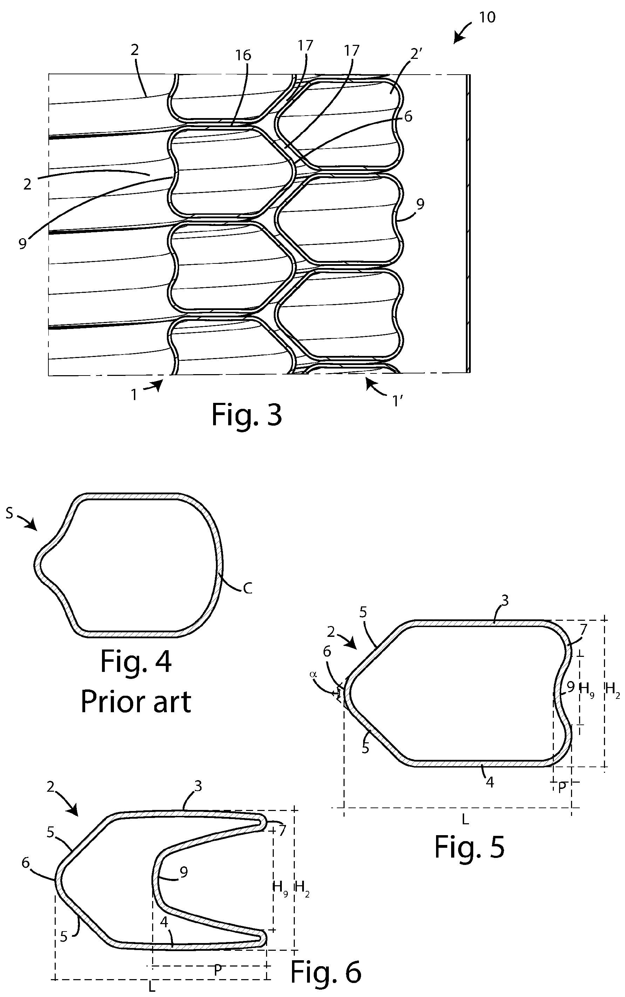

In both of said known solutions, the outer surface of each coil S of the innermost exchanger, facing towards the burner of the condensing boiler, has a smooth and slightly convex surface (as shown in Figure 4), with the convexity C facing towards the burner.

A drawback of such geometric shape is that in correspondence with the portion of the heat exchanger facing towards the burner flame it is more subject to corrosion, due to the phenomenon of material flaking.

Such a phenomenon is typical of stainless steels subject to high-temperature oxidation.

When stainless steels are brought to high temperatures, an oxide and scale layer forms on the surface of the material.

The scale and the metal substrate have different thermal expansions which will affect the stability of the oxide scale, especially if the material is subjected to frequent thermal cycles. Due to the different coefficients of thermal expansion, excess scale will form which will eventually shatter or break as the metal cools. This phenomenon is cyclic, the surface will locally become thinner and thinner, leading then to the formation of a crack and therefore to the breaking of the material.

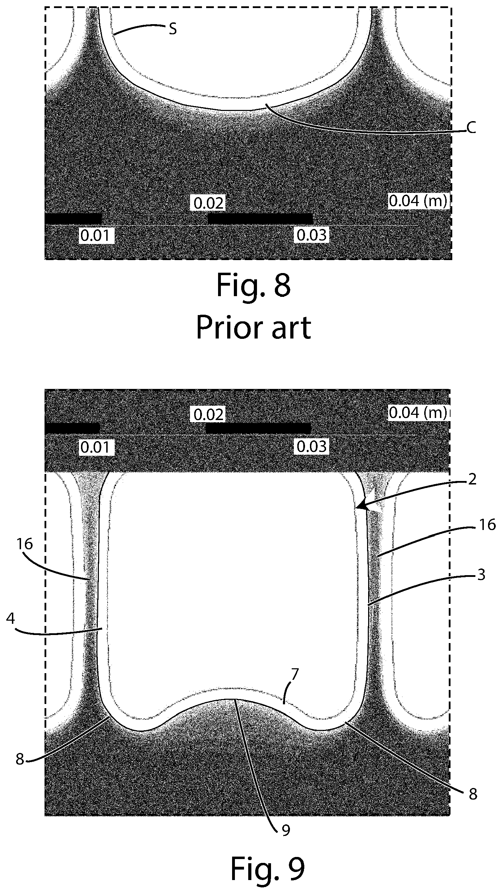

Again another drawback of such prior art geometric shape is that the internal wall of each coil of the internal heat exchanger generally has a relatively cold temperature, as shown in Figure 8 (generally between 30° and 90 °C) compared to the temperature of the flame of the burner 11 (which is around 1600 ° and 2000 °C), abruptly interrupting the process of oxidation of the carbon monoxide to carbon dioxide as soon as the combustion fumes reach such wall. Therefore, a large number of polluting agents are produced.

The aim of the present invention is to solve the prior art drawbacks.

In particular, an aim is to reduce, if not eliminate, the phenomenon of the formation of flaking of the material which makes up the surface of the exchanger in the combustion zone, in correspondence with the burner.

A further aim of the present invention is to reduce the number of polluting agents produced by the combustion process.

An object of the present invention is a heat exchanger for a boiler, in particular a condensing boiler, said boiler comprising at least one combustion zone, and a burner arranged in correspondence with said combustion zone along a longitudinal axis, said heat exchanger being adapted to encircle said burner of said boiler when inserted in said boiler, said heat exchanger providing a steel conduit, preferably stainless steel, having a spiral profile and comprising a plurality of coils having a common axis of symmetry, said heat exchanger being characterised in that the internal portion facing towards said axis of symmetry of each coil has a continuous depression along at least one portion of said spiral profile.

In particular, according to the invention, the cross section of the conduit of each coil can have a concavity defined between two inflection points arranged at the internal portion of said coil.

More specifically, according to the invention, the depth of said concavity can be between 4% and 50% of the width of the cross section of the conduit of the respective coil.

Again, according to the invention, the height of said concavity can be between 43% and 81% of the height of the cross section of the conduit of the respective coil, wherein the height of the concavity is measured as the distance between said two inflection points.

Still according to the invention, the cross section of said conduit of each coil can have two opposite and parallel sides, which are substantially transverse to said axis of symmetry, such as to form a plurality of parallel channels between adjacent coils.

Further according to the invention, the cross section of the conduit of each coil can be circular, triangular or quasi-pentagonal and can have an internal side comprising said concavity.

Furthermore, it is an object of the present invention a boiler comprising at least one combustion zone, a burner arranged in correspondence with said combustion zone along a longitudinal axis, and a first heat exchanger as previously described, said first heat exchanger encircling said burner, the axis of symmetry of said first heat exchanger coinciding with said longitudinal axis of the boiler, said boiler being characterised in that the internal portion facing towards said burner of each coil of said first heat exchanger has said continuous depression along said spiral profile at least in correspondence with said combustion zone.

In particular, according to the invention, said boiler can comprise a second heat exchanger which provides a conduit having a spiral profile and comprising a plurality of coils whose axis of symmetry coincides with said longitudinal axis, the coils of said second heat exchanger having a greater radius than the radius of the coils of the first heat exchanger so as to encircle it externally.

More particularly, according to the invention, each coil of the second heat exchanger can be arranged between two coils of the first heat exchanger so as to mutually interpenetrate and form additional channels for the passage of the combustion fumes.

Preferably according to the invention, the cross section of said conduit of each coil of said first heat exchanger and of said second heat exchanger can have an edge having an acute angle between 30 ° and 90°, preferably equivalent to 90°, said edge of each coil of each heat exchanger facing towards the gap between two adjacent coils of the other heat exchanger.

Furthermore, according to the invention, the cross section of the conduit of each coil of the second heat exchanger can have the same shape as the cross section of the conduit of each coil of the first heat exchanger mirrored with respect to an imaginary plane parallel to said longitudinal axis.

Finally, according to the invention, said boiler can be a condensing boiler comprising an adjacent condensation zone along said axis longitudinal to said combustion zone and separated therefrom by an internal separation part.

The invention will now be described for illustrative but non-limiting purposes, with particular reference to the drawings of the attached figures, wherein:

Figure 1 shows a top view of a condensing boiler comprising a pair of spiral heat exchangers according to the invention;

Figure 2 shows a cross-sectional view along the plane II - II' of the condensing boiler of Figure 1;

Figure 3 shows detail III of Figure 2;

Figure 4 shows a cross-sectional view of a prior art heat exchanger conduit;

Figure 5 shows a cross-sectional view of the conduit of one of the two heat exchangers of the condensing boiler of Figure 1;

Figure 6 shows a cross-sectional view of a heat exchanger conduit according to the invention in a second variant;

Figure 7 shows the detail VII of Figure 2 wherein the dynamics of the fluxes of the combustion gases are shown in correspondence with the combustion zone;

Figure 8 shows a cross-sectional view of a detail of a prior art heat exchanger having conduits like that of Figure 4, wherein different thermal zones are shown;

Figure 9 shows a cross-sectional view of the heat exchanger of Figure 1, wherein different thermal zones are shown;

Figure 10 shows a cross-sectional view of the condensing boiler according to the invention in correspondence with the combustion zone in a first embodiment variant;

Figures 11a - 11c each show a cross-sectional view of the condensing boiler according to the invention in correspondence with the condensation zone according to three different embodiments; and

Figure 12 shows a cross-sectional view of a condensing boiler according to the invention in a further embodiment.

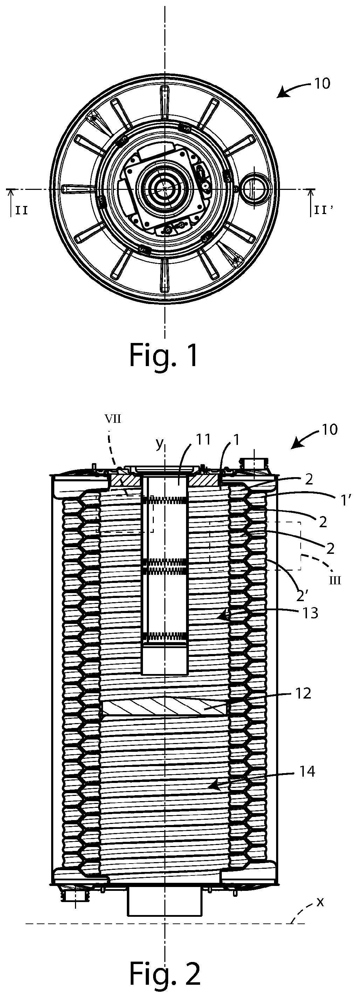

Referring to Figures 1 and 2, a condensing boiler 10 can be seen comprising a pair of heat exchangers 1, 1' according to the invention in a preferred embodiment.

The condensing boiler 10 also provides a burner 11 arranged in correspondence with the combustion zone 13, an internal separation wall 12 arranged between the combustion zone 13 and the condensation zone 14.

Each heat exchanger 1, 1' is adapted for the passage of a heat transfer fluid to be heated through heat exchange with the condensation fluids in correspondence with the condensation zone 14 and with the combustion fumes in correspondence with the combustion zone 13.

In particular, each heat exchanger 1, 1' has a spiral pattern and one 1' is concentric with respect to the other 1. Said heat exchangers 1, 1' have their axis of symmetry coinciding with the longitudinal axis y of symmetry of the boiler 10. In particular, said longitudinal axis y being a vertical axis arranged in a vertical direction with respect to an apparent horizontal support plane x.

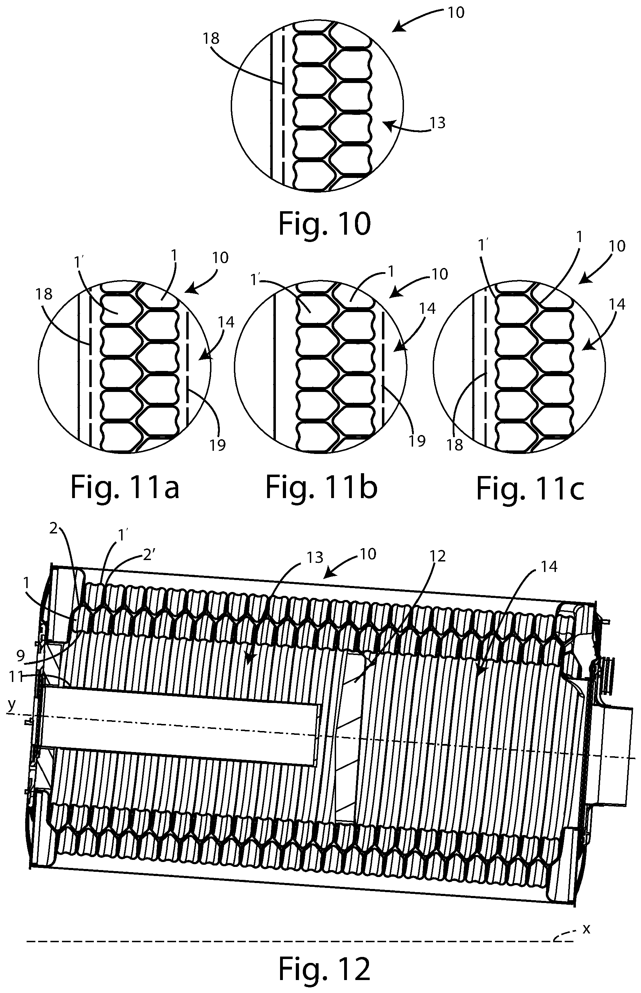

In other embodiments, such as the one shown in Figure 12, the axis of symmetry y of the boiler 10 can be oriented transversally to a vertical axis, in other words it can have the axis of symmetry y substantially parallel to the horizontal support plane x or slightly inclined to it. For example, by an angle of 4°, as in Figure 12.

Each heat exchanger 1, 1' comprises a conduit having a spiral profile. Said conduit is made of steel, preferably stainless steel.

In particular, a first spiral heat exchanger 1 can be seen comprising a plurality of coils 2 and having the internal portion 7 of each coil 2 facing towards the burner 11. The second spiral heat exchanger 1' also comprises a plurality of coils 2' and has a greater radius than the first heat exchanger 1 so as to circumscribe it externally.

Furthermore, each coil 2, 2' of each heat exchanger 1, 1' has a cross section of quasi-pentagonal shape, as shown in particular in Figures 3 and 5. Specifically, quasi-pentagonal shape means a geometric figure having five sides, where however the sides and the angles between the sides are not necessarily all identical.

In particular, as shown by way of example in Figure 5 for the coils of both the first 1 and the second 1' heat exchanger, the quasi-pentagonal section has a first side 3 and a second side 4 opposite to each other which are substantially parallel to each other and substantially transverse to the longitudinal axis y. Furthermore, the quasi-pentagonal section of each coil 2 has a third side 7 for joining the two opposite sides 3 and 4 and, in the position opposite to said third side 7, it has two inclined sides 5 which form an edge 6 having an acute angle $\alpha$. Said acute angle $\alpha$ being between 30° and 90°, preferably in the embodiment of Figure 5 it is equivalent to 90°.

In each spiral heat exchanger 1 between the first 3 and the second 4 side of adjacent coils 2 of the same exchanger 1 a channel 16 is formed for the passage of the combustion fumes in correspondence with the combustion zone 13 or for the passage of the condensing liquids in correspondence with the condensation zone 14. The fact that the first and second sides 3, 4 of each coil 2 are parallel makes it possible to obtain a better heat exchange. In other embodiments, however, they may not even be parallel.

Furthermore, when the two spiral exchangers 1, 1' are placed side by side, they are arranged with the edges 6 of the respective coils 2, 2' facing towards the edges 6 of the coils 2', 2 of the other spiral exchanger 1', 1 and so as to fit between the inclined sides 5 of two side-by-side coils 2 of the same spiral exchanger 1, as shown in Figure 3, so as to interpenetrate.

In this way the two spiral exchangers 1, 1' concentric with each other are particularly compact and form additional channels 17 for the passage of the combustion fumes or condensing liquids.

Finally, still observing Figure 5, in correspondence with the third side 7, a concavity 9 is obtained, which forms a depression 9 along the entire wall of the third side 7 of the coil 2.

Therefore, each spiral exchanger 1 has a continuous depression 9 along its entire wall in correspondence with the respective third side 7 which follows the spiral profile of the exchanger 1.

In particular, in the first heat exchanger 1 the depression 9 is facing towards the internal portion of the condensing boiler 10. In the combustion zone 13, such depression 9 is facing towards the burner 11 directly exposed to the flame of the burner 11, when the boiler 10 is in use.

This depression 9 is obtained by mechanical machining of a tube profile which initially has said third convex side 7 (as for example in the prior art of Figure 4), obtaining the concavity 9 shown in the figures.

The depth P of the concavity 9 is preferably 4% of the width L of the coil 2.

In other embodiments the depth P of the concavity 9 can be between 4% and 50% of the width L of the coil 2 as in the following formula:

$$4\% \leq \frac{P}{L} \leq 50\%.$$

Figure 6 shows a variant of the coil 2 according to the invention wherein the depth P of the concavity 9 is equivalent to 50% of the width L of the coil 2.

Furthermore, the height $H_g$ of the concavity 9 is substantially 61% of the height $H_2$ of the coil 2.

The height $H_9$ of the concavity 9 is measured as the distance between the inflection points of the concavity 9 arranged in correspondence with the third side 7.

In other embodiments the height $H_9$ of the concavity 9 can be between 43% and 81% of the height $H_2$ of the coil 2 as in the following formula:

$$43\% \leq \frac{H_9}{H_2} \leq 81\%.$$

For example, in the variant of Figure 6 the height $H_9$ of the concavity 9 is substantially 81% of the height $H_2$ of the coil 2.

In the second heat exchanger 1' the depression 9 is instead facing towards the outside of the condensing boiler 10. In other embodiments the second heat exchanger 1' may not have said depression.

Again, in other embodiments the first heat exchanger 1 can have the depression 9 continuous along its spiral profile only in correspondence with the combustion zone 13.

The depression 9 obtained in each coil 2 of the first heat exchanger 1 in correspondence with the combustion zone 13 advantageously allows an improvement in the reliability of the product. The internal portion 7 of the coils 2 of the first heat exchanger 1 directly exposed to the flame of the burner **11** is in a state of compression and this gives greater resistance to corrosion. In this way the phenomenon of material flaking is counteracted, prolonging the product life.

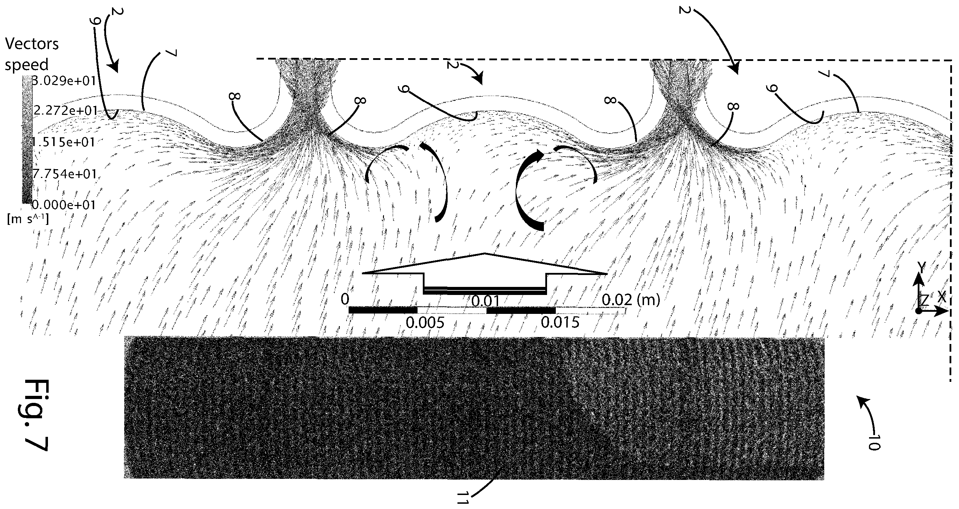

Furthermore, thanks to the presence of the concavity 9 in correspondence with the third side 7 of each coil 2 of the first heat exchanger 1, an improvement in combustion is advantageously obtained, as exemplified in Figure 7. The concave shape 9 of the surface of the third side 7 makes it possible to create a zone of stagnation or recirculation of the combustion gases, as shown in Figure 9. The flame of the burner **11** moves away from the cold wall of the tube 2 of the first exchanger 1 and the combustion is completed in a clean way: in fact, the oxidation of the carbon monoxide to carbon dioxide is not interrupted by the direct contact with the wall of the tube 2, the presence of the concavity 9 therefore makes it possible to have a longer path of the combustion flow, slowing down the CO to $CO_2$ oxidation process.

Such a phenomenon is particularly clear from the comparison of Figures 8 and 9 where, in grey scale, the darker colour shows the temperature of the combustion gases coming from the burner 11, and the gradually lighter gradient colours show the zones where the temperature cools towards the surface of the coil tube 2.

In particular, in the diagrams of Figures 8 and 9 the zones indicate the following average temperatures:

- darker coloured zone: average T° = 1700°C;
- next zone: average T° = 1400 °C;
- next zone: average T° = 950 °C;
- next zone: average T° = 440 °C; and
- lighter coloured zone: average T° = 100 °C.

As can be seen in the solution according to the invention, thanks to the concavity 9, the lower temperature zone is further away from the burner 11 compared to the prior art solution shown in Figure 8. Therefore, the material directly exposed to the flame is in a state of compression (the oxide is subject to compressive stresses, therefore it tends to adhere to the surface) and this gives greater resistance to corrosion.

The greater the surface of the concavity 9 facing towards the flame of the burner 11, the greater the benefits of this solution. The limit to the concavity extension is the tube deformation which must not be excessive to avoid failures. In fact, it is necessary to respect the minimum bending radii dictated by the absolute dimensions of the tube and the material used.

Furthermore, an excessively deep concavity 9 can increase the hydraulic resistance of the fluid flowing in the tubes of the coils 2, as it reduces its passage section. To limit the increase in hydraulic resistance, the depth of the concavity 9 must be evaluated for each specific application. The hydraulic resistance is a function of the passage section. Such resistance impacts on the boiler flow rate and on the choice of circulator. The depth of the concavity is optimised based on a cost/benefit evaluation.

In other embodiments, the first spiral heat exchanger 1 can have a different section from the pentagonal or quasi-pentagonal one described, for example it may have a circular or triangular section, provided that it has said depression 9 at least in correspondence with the combustion zone 13.

In variant embodiments of the boiler 10 according to the invention, the exchangers 1, 1' can be surrounded by a slotted jacket 18 in correspondence with the combustion zone 13 and/or the condensation zone 14.

By slotted jacket is meant a bulkhead provided with openings, for example slots and/or holes. Such a slotted jacket 18 can be provided externally to the heat exchanger arranged in a serpentine manner in the combustion zone and can be arranged in correspondence with the condensation zone, both internally and/or externally to the heat exchangers

The openings of the bulkheads are preferably positioned between two consecutive coils, in this way, the heat exchange and the circulation of the fumes are considerably improved.

In particular, Figure 10 shows the slotted jacket 18 in correspondence with the combustion zone 13, and Figures 11a and 11c show it also in correspondence with the condensation zone 14.

Again, as shown in Figures 11a and 11b, a second slotted jacket 19 may be provided, arranged internally to the heat exchangers 1, 1', in particular surrounded by them, in correspondence with the condensation zone 14.

In the variant of Figure 11a both slotted jackets are provided, an external one 18 and an internal one 19, while in the variant of figure 11b there is only the internal slotted jacket 19.

In correspondence with the combustion zone 13, the openings of the slotted jacket 18 or 19 can be constant or variable to balance the passage of the flow of combustion fumes between the internal exchanger 1 and the external exchanger 1', thus balancing and optimising the heat exchange.

Having variable openings results in a balance of the passage of combustion fumes and therefore in a better heat exchange.

The balance of the openings is a function not only of the heat exchanger but also of the structure and distribution of the burner.

The solution according to the invention is integrated into a condensing boiler, however it can also be provided in boilers that only have a combustion zone, maintaining the technical advantages of the present invention. Therefore, it can be integrated into a boiler that is not necessarily a condensing boiler, which provides for the heating of liquids, for example domestic hot water.

Advantageously, thanks to the solution according to the invention, the oxidation times of the CO into $CO_2$ are lengthened, reducing the number of polluting agents produced.

Again, thanks to the present invention, the phenomenon of the formation of flaking of the material which makes up the surface of the exchanger in the combustion zone is reduced.

In the foregoing the preferred embodiments have been described and variants of the present invention have been suggested, but it should be understood that those skilled in the art will be able to make modifications and changes without thereby departing from its scope of protection, as defined by the attached claims.

**Claims**

1. A boiler (10), in particular a condensing boiler (10), said boiler (10) comprising at least one combustion zone (13), a burner (11) arranged in correspondence with said combustion zone (13) along a longitudinal axis (y), and at least one first heat exchanger (1) which encircles said burner (11) with its internal portion (7) facing towards said burner (11) and directly exposed to the flame of said burner (11), when in use,

   said heat exchanger (1) providing a steel conduit, preferably stainless steel, having a spiral profile and comprising a plurality of coils (2) having a common axis of symmetry (y),
   the axis of symmetry (y) of said first heat exchanger (1) coinciding with said longitudinal axis (y) of the boiler (10),
   said boiler (10) being **characterised in that** the internal portion (7) facing towards said axis of symmetry (y) of each coil (2) of said first heat exchanger (1) has a continuous depression (9) along a portion of said spiral profile at least in correspondence with said combustion zone (13) of the boiler (10).

**2.** The boiler (10) according to the previous claim, wherein the cross-section of the conduit of each coil (2) of said first heat exchanger (1) has a concavity (9) defined by two inflection points arranged at the internal portion (7) of said coil (2).

**3.** The boiler (10) according to the previous claim, wherein the depth (P) of said concavity (9) is comprised between 4% and 50% of the width (L) of the cross-section of the conduit of the respective coil (2).

**4.** The boiler (10) according to claim 2 or 3, wherein the height ($H_9$) of said concavity (9) is comprised between 43% and 81% of the height ($H_2$) of the cross-section of the conduit of the respective coil (2), wherein the height ($H_9$) of the concavity (9) is measured as the distance between said two inflection points.

**5.** The boiler (10) according to any one of the claims 2 - 4, wherein the cross-section of said conduit of each coil (2) has two opposite and parallel sides (3, 4), which are substantially transverse to said axis of symmetry (y), such as to form a plurality of parallel channels (16) between adjacent coils (2).

**6.** The boiler (10) according to any one of claims 2 - 5, wherein the cross-section of the conduit of each coil (2) is circular, triangular or almost-pentagonal and it has an internal side (7) which comprises said concavity (9).

**7.** The boiler (10) according to any one of the previous claims, wherein said boiler (10) comprises a second heat exchanger (1') which provides a conduit having a spiral profile and comprising a plurality of coils (2') whose axis of symmetry coincides with said longitudinal axis (y), the coils (2') of said second heat exchanger (1') having a greater radius than the radius of the coils (2) of the first heat exchanger (1) so as to externally encircle it.

**8.** The boiler (10) according to the previous claim, wherein each coil (2') of the second heat exchanger (1') is arranged between two coils (2) of the first heat exchanger (1) so as to mutually interpenetrate and form additional channels (17) for the passage of the combustion fumes.

**9.** The boiler (10) according to the previous claim, wherein the cross-section of said conduit of each coil (2; 2') of said first heat exchanger (1) and of said second heat exchanger (1') has an edge (6) having an acute angle ($\alpha$) between 30 ° and 90°, preferably equivalent to 90°, said edge (6) of each coil (2; 2') of each heat exchanger (1;1') being faced towards the gap between two adjacent coils (2; 2') of the other heat exchanger (1; 1').

**10.** The boiler (10) according to any one of the claims 8 or 9, wherein the cross-section of the conduit of each coil (2') of the second heat exchanger (1') has the same shape as the cross-section of the conduit of each coil (2) of the first heat exchanger (1) mirrored with respect to an imaginary plane, parallel to said longitudinal axis (y)

**11.** The boiler (10) according to any one of the previous claims, wherein said boiler (10) is a condensing boiler (10) comprising a condensation zone (14) adjacent along said longitudinal axis (y) to said combustion zone (13) and separated from it by an internal separation part (12).

**Patentansprüche**

**1.** Kessel (10), insbesondere Brennwertkessel (10), wobei der Kessel (10) mindestens eine Verbrennungszone (13), einen Brenner (11), der in Übereinstimmung mit der Verbrennungszone (13) entlang einer Längsachse (y) angeordnet ist, und mindestens einen ersten Wärmetauscher (1) umfasst, der den Brenner (11) umgibt, wobei sein innerer Abschnitt (7) dem Brenner (11) zugewandt ist und im Betrieb direkt der Flamme des Brenners (11) ausgesetzt ist,

   wobei der Wärmetauscher (1) eine Stahlleitung, vorzugsweise aus rostfreiem Stahl, mit einem spiralförmigen Profil bereitstellt und eine Vielzahl von Rohrschlangen (2) mit einer gemeinsamen Symmetrieachse (y) umfasst,
   wobei die Symmetrieachse (y) des ersten Wärmetauschers (1) mit der Längsachse (y) des Kessels (10) zusammenfällt,
   wobei der Kessel (10) **dadurch gekennzeichnet ist, dass** der innere Abschnitt (7), der der Symmetrieachse (y) jeder Rohrschlange (2) des ersten Wärmetauschers (1) zugewandt ist, eine durchgehende Vertiefung (9) entlang eines Abschnitts des spiralförmigen Profils zumindest in Übereinstimmung mit der Verbrennungszone (13) des Kessels (10) aufweist.

**2.** Kessel (10) nach dem vorhergehenden Anspruch, wobei der Querschnitt der Leitung jeder Rohrschlange (2) des ersten Wärmetauschers (1) eine Konkavität (9) aufweist, die durch zwei Wendepunkte definiert ist, die an dem inneren Abschnitt (7) der Rohrschlange (2) angeordnet sind.

**3.** Kessel (10) nach dem vorhergehenden Anspruch, wobei die Tiefe (P) der Konkavität (9) zwischen 4 % und 50 % der Breite (L) des Querschnitts der Leitung der jeweiligen Rohrschlange (2) beträgt.

**4.** Kessel (10) nach Anspruch 2 oder 3, wobei die Höhe ($H_9$) der Konkavität (9) zwischen 43 % und 81 % der Höhe ($H_2$) des Querschnitts der Leitung der jeweiligen Rohrschlange (2) beträgt, wobei die Höhe ($H_9$) der Konkavität (9) als der Abstand zwischen den beiden Wendepunkten gemessen wird.

**5.** Kessel (10) nach einem der Ansprüche 2 - 4, wobei der Querschnitt der Leitung jeder Rohrschlange (2) zwei gegenüberliegende und parallele Seiten (3, 4) aufweist, die im Wesentlichen quer zu der Symmetrieachse (y) verlaufen, so dass eine Vielzahl von parallelen Kanälen (16) zwischen benachbarten Rohrschlangen (2) gebildet werden.

**6.** Kessel (10) nach einem der Ansprüche 2 - 5, wobei der Querschnitt der Leitung jeder Rohrschlange (2) kreisförmig, dreieckig oder nahezu fünfeckig ist und eine Innenseite (7) aufweist, die die Konkavität (9) umfasst.

**7.** Kessel (10) nach einem der vorhergehenden Ansprüche, wobei der Kessel (10) einen zweiten Wärmetauscher (1') umfasst, der eine Leitung mit einem spiralförmigen Profil bereitstellt und eine Vielzahl von Rohrschlangen (2') umfasst, deren Symmetrieachse mit der Längsachse (y) zusammenfällt, wobei die Rohrschlangen (2') des zweiten Wärmetauschers (1') einen größeren Radius als der Radius der Rohrschlangen (2) des ersten Wärmetauschers (1) aufweisen, so dass sie diesen von außen umgeben.

**8.** Kessel (10) nach dem vorhergehenden Anspruch, wobei jede Rohrschlange (2') des zweiten Wärmetauschers (1') zwischen zwei Rohrschlangen (2) des ersten Wärmetauschers (1) angeordnet ist, so dass sie sich gegenseitig durchdringen und zusätzliche Kanäle (17) für den Durchgang der Verbrennungsgase bilden.

**9.** Kessel (10) nach dem vorhergehenden Anspruch, wobei der Querschnitt der Leitung jeder Rohrschlange (2; 2') des ersten Wärmetauschers (1) und des zweiten Wärmetauschers (1') eine Kante (6) mit einem spitzen Winkel ($\alpha$) zwischen 30° und 90°, vorzugsweise gleich 90°, aufweist, wobei die Kante (6) jeder Rohrschlange (2; 2') jedes Wärmetauschers (1; 1') dem Spalt zwischen zwei benachbarten Rohrschlangen (2; 2') des anderen Wärmetauschers (1; 1') zugewandt ist.

**10.** Kessel (10) nach einem der Ansprüche 8 oder 9, wobei der Querschnitt der Leitung jeder Rohrschlange (2') des zweiten Wärmetauschers (1') die gleiche Form wie der Querschnitt der Leitung jeder Rohrschlange (2) des ersten Wärmetauschers (1) aufweist, die in Bezug auf eine imaginäre Ebene parallel zu der Längsachse (y) gespiegelt ist.

**11.** Kessel (10) nach einem der vorhergehenden Ansprüche, wobei der Kessel (10) ein Brennwertkessel (10) ist, der eine Kondensationszone (14) umfasst, die entlang der Längsachse (y) an die Verbrennungszone (13) angrenzt und von dieser durch einen internen Trennteil (12) getrennt ist.

**Revendications**

**1.** Chaudière (10), en particulier une chaudière à condensation (10), ladite chaudière (10) comprenant au moins une zone de combustion (13), un brûleur (11) disposé en correspondance avec ladite zone de combustion (13) le long d'un axe longitudinal (y), et au moins un premier échangeur de chaleur (1) qui entoure ledit brûleur (11) avec sa partie interne (7) orientée vers ledit brûleur (11) et directement exposée à la flamme dudit brûleur (11), lorsqu'il est en service,

ledit échangeur de chaleur (1) est constitué d'un conduit en acier, de préférence en acier inoxydable, ayant un profil en spirale et comprenant une pluralité de serpentins (2) possédant un axe de symétrie (y) commun,
l'axe de symétrie (y) dudit premier échangeur de chaleur (1) coïncidant avec ledit axe longitudinal (y) de la chaudière (10),
ladite chaudière (10) étant **caractérisée en ce que** la partie interne (7) orientée vers ledit axe de symétrie (y) de chaque serpentin (2) dudit premier échangeur de chaleur (1) présente une dépression continue (9) le long d'une partie dudit profil en spirale au moins en correspondance avec ladite zone de combustion (13) de la chaudière (10).

**2.** Chaudière (10) selon la revendication précédente, la section transversale du conduit de chaque serpentin (2) dudit premier échangeur de chaleur (1) présentant une concavité (9) définie par deux points d'inflexion disposés au niveau de la partie interne (7) dudit serpentin (2).

**3.** Chaudière (10) selon la revendication précédente, la profondeur (P) de ladite concavité (9) étant comprise entre 4 et 50 % de la largeur (L) de la section transversale du conduit du serpentin respectif (2).

**4.** Chaudière (10) selon la revendication 2 ou 3, la hauteur ($H_9$) de ladite concavité (9) étant comprise entre 43 et 81 % de la hauteur ($H_2$) de la section transversale du conduit du serpentin respectif (2), la hauteur ($H_9$) de la concavité (9) étant mesurée comme la distance entre lesdits deux points d'inflexion.

5. Chaudière (10) selon l'une quelconque des revendications 2 - 4, la section transversale dudit conduit de chaque serpentin (2) comportant deux côtés opposés et parallèles (3, 4), qui sont sensiblement transversaux audit axe de symétrie (y), de manière à former une pluralité de canaux parallèles (16) entre les serpentins adjacents (2).

6. Chaudière (10) selon l'une quelconque des revendications 2 - 5, la section transversale du conduit de chaque serpentin (2) étant circulaire, triangulaire ou presque pentagonale et possédant un côté interne (7) qui comprend ladite concavité (9).

7. Chaudière (10) selon l'une quelconque des revendications précédentes, ladite chaudière (10) comprenant un second échangeur de chaleur (1') constitué d'un conduit ayant un profil en spirale et comprenant une pluralité de serpentins (2') dont l'axe de symétrie coïncide avec ledit axe longitudinal (y), les serpentins (2') dudit second échangeur de chaleur (1') possédant un rayon plus grand que le rayon des serpentins (2) du premier échangeur de chaleur (1) de manière à l'entourer extérieurement.

8. Chaudière (10) selon la revendication précédente, chaque serpentin (2') du second échangeur de chaleur (1') étant disposé entre deux serpentins (2) du premier échangeur de chaleur (1) de manière à s'interpénétrer mutuellement et à former des canaux supplémentaires (17) pour le passage des fumées de combustion.

9. Chaudière (10) selon la revendication précédente, la section transversale dudit conduit de chaque serpentin (2 ; 2') dudit premier échangeur de chaleur (1) et dudit second échangeur de chaleur (1') comportant un bord (6) ayant un angle aigu ($\alpha$) compris entre 30 et 90°, de préférence équivalent à 90°, ledit bord (6) de chaque serpentin (2 ; 2') de chaque échangeur de chaleur (1 ; 1') étant orienté vers l'espace entre deux serpentins adjacents (2 ; 2') de l'autre échangeur de chaleur (1 ; 1").

10. Chaudière (10) selon l'une quelconque des revendications 8 ou 9, la section transversale du conduit de chaque serpentin (2') du second échangeur de chaleur (1') ayant la même forme que la section transversale du conduit de chaque serpentin (2) du premier échangeur de chaleur (1), réfléchie par rapport à un plan imaginaire, parallèle audit axe longitudinal (y).

11. Chaudière (10) selon l'une quelconque des revendications précédentes, ladite chaudière (10) étant une chaudière à condensation (10) comprenant une zone de condensation (14) adjacente le long dudit axe longitudinal (y) à ladite zone de combustion (13) et séparée de celle-ci par une pièce de séparation interne (12).

Fig. 1

Fig. 2

Fig. 3

Fig. 4
Prior art

Fig. 5

Fig. 6

Fig. 7

0.02

0.04 (m)

0.01

0.03

## Fig. 8
## Prior art

0.02

0.04 (m)

0.01

0.03

2

16

16

3

4

7

8

8

9

## Fig. 9

Fig. 10

Fig. 11a          Fig. 11b          Fig. 11c

Fig. 12

**EP 4 544 254 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7428883 B
- EP 2504632 B1
- WO 2016084109 A1